(19) Europäisches Patentamt
European Patent Office
Office européen des brevets

(11) **EP 3 146 504 B1**

(12) **FASCICULE DE BREVET EUROPEEN**

(45) Date de publication et mention de la délivrance du brevet:
**10.03.2021 Bulletin 2021/10**

(21) Numéro de dépôt: **15728071.0**

(22) Date de dépôt: **19.05.2015**

(51) Int Cl.:
***G06T 7/73*** (2017.01)

(86) Numéro de dépôt international:
**PCT/FR2015/051315**

(87) Numéro de publication internationale:
**WO 2015/177460 (26.11.2015 Gazette 2015/47)**

(54) **PROCÉDÉ DE CONSTRUCTION D'UN MODÈLE DU VISAGE D'UN INDIVIDU, PROCÉDÉ ET DISPOSITIF D'ANALYSE DE POSTURE UTILISANT UN TEL MODÈLE**

VERFAHREN ZUR HERSTELLUNG EINES MODELLS DES GESICHTS EINER PERSON, VERFAHREN UND VORRICHTUNG ZUR HALTUNGSANALYSE MITTELS EINES DERARTIGEN MODELLS

METHOD FOR CONSTRUCTING A MODEL OF THE FACE OF A PERSON, METHOD AND DEVICE FOR POSTURE ANALYSIS USING SUCH A MODEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.05.2014 FR 1454546**

(43) Date de publication de la demande:
**29.03.2017 Bulletin 2017/13**

(73) Titulaire: **Essilor International**
**94220 Charenton-le-Pont (FR)**

(72) Inventeur: **ESCALIER, Guilhem**
**94227 Charenton-le-Pont Cedex (FR)**

(74) Mandataire: **Jacobacci Coralis Harle**
**32, rue de l'Arcade**
**75008 Paris (FR)**

(56) Documents cités:
**WO-A1-2014/032496      US-A1- 2006 210 165**

- **ZAKARIA AJMAL ET AL: "Learning a face model for tracking and recognition", 2002 IEEE INTERNATIONAL CONFERENCE ON ACOUSTICS, SPEECH, AND SIGNAL PROCESSING. PROCEEDINGS. (ICASSP). ORLANDO, FL, MAY 13 - 17, 2002; [IEEE INTERNATIONAL CONFERENCE ON ACOUSTICS, SPEECH, AND SIGNAL PROCESSING (ICASSP)], NEW YORK, NY : IEEE, US, 13 mai 2002 (2002-05-13), pages IV-3612, XP032015622, DOI: 10.1109/ICASSP.2002.5745437 ISBN: 978-0-7803-7402-7**
- **COOTES T F ET AL: "Active shape models - their training and application", COMPUTER VISION AND IMAGE UNDERSTANDING, ACADEMIC PRESS, US, vol. 61, no. 1, 1 janvier 1995 (1995-01-01), pages 38-59, XP002607166, ISSN: 1077-3142, DOI: 10.1006/CVIU.1995.1004 [extrait le 2002-04-24]**

## Description

### DOMAINE TECHNIQUE AUQUEL SE RAPPORTE L'INVENTION

La présente invention concerne de manière générale le domaine de l'optique ophtalmique.

Elle concerne plus particulièrement un système de prise de mesures sans clip, et, dans ce cadre, elle propose un procédé de construction d'un modèle du visage d'un individu.

Elle concerne également un procédé et un dispositif d'analyse de posture utilisant le modèle construit.

### ARRIERE-PLAN TECHNOLOGIQUE

Dans les systèmes de prise de mesures sur le visage d'un individu (utiles notamment en vue de la fabrication de lunettes ophtalmiques adaptées à ce visage), on utilise classiquement un clip en tant que référentiel pour dimensionner les mesures.

En effet, un tel clip a notamment pour avantages d'être non déformable et étalonné, ce qui en fait un référentiel particulièrement robuste.

Afin de simplifier la prise de mesures, on souhaiterait toutefois pouvoir se passer de l'utilisation d'un clip, ce qui implique que le visage lui-même puisse servir de référentiel.

Cette solution paraît toutefois difficilement envisageable à cause des deux problèmes qui suivent : d'une part, les visages sont bien sûr différents d'une personne à l'autre ; d'autre part, le visage n'est pas fixe mais déformable (en fonction notamment des expressions du visage).

US2006/210165 et WO2014/032496 divulguent la construction d'un modèle du visage d'un individu.

### OBJET DE L'INVENTION

Dans ce contexte, la présente invention propose un procédé de construction d'un modèle du visage d'un individu comportant :

- une étape de localisation consistant à localiser, au moyen d'un appareil d'acquisition et à chaque instant d'une pluralité d'instants d'acquisition, une même pluralité de points caractéristiques dudit visage de l'individu, en déterminant un coefficient d'erreur lors de la reconnaissance des points caractéristiques, de manière à former une pluralité correspondante de modèles particuliers dudit visage de l'individu comprenant chacun les positions desdits points caractéristiques du visage de l'individu à l'instant associé au modèle particulier concerné,
- une étape d'ajustement consistant à déterminer, pour chaque modèle particulier dudit visage de l'individu, un modèle ajusté par rapport à un modèle de référence dudit visage de l'individu, le modèle ajusté étant obtenu sur la base du modèle particulier concerné de sorte que la distance entre le modèle ajusté et le modèle de référence soit minimale au sens d'une métrique donnée, et

- une étape de construction consistant à construire, à partir des modèles ajustés obtenus à l'étape d'ajustement, ledit modèle du visage de l'individu, en déterminant, pour chaque point caractéristique du visage (V), un point dudit modèle du visage (V) de l'individu comme le barycentre des points correspondants dans les différents modèles ajustés, pondérés par un coefficient lie au coefficient d'erreur déterminé.

On obtient ainsi un modèle du visage, qui peut servir de référentiel métrologique, malgré les déformations possibles du visage dans les différents modèles particuliers ; le modèle construit reste toutefois cohérent avec les différents modèles particuliers localisés grâce à l'étape d'ajustement.

En pratique, ledit modèle de référence peut être l'un desdits modèles particuliers.

Afin d'obtenir un modèle encore plus précis, on peut éventuellement prévoir les étapes suivantes :

- on exécute une première fois les étapes de localisation, d'ajustement et de construction pour déterminer, à partir desdits modèles particuliers déterminés lors de l'étape de localisation, des premiers modèles ajustés et construire un premier modèle dudit visage de l'individu,
- on exécute une deuxième fois l'étape d'ajustement, en utilisant comme modèle de référence ledit premier modèle du visage de l'individu, afin de déterminer, pour chaque modèle particulier, un deuxième modèle ajusté par rapport audit modèle de référence, et
- on exécute une deuxième fois l'étape de construction à partir des deuxièmes modèles ajustés obtenus à la deuxième étape d'ajustement.

Le modèle du visage, le modèle de référence, les modèles particuliers et les modèles ajustés sont par exemple des modèles tridimensionnels ; les positions des points caractéristiques peuvent alors être elles aussi tridimensionnelles.

Selon une possibilité de mise en œuvre, l'appareil d'acquisition peut comprendre au moins deux appareils de capture d'images adaptés, chacun, à capturer au moins une image bidimensionnelle dudit visage de l'individu sur une surface sensible de pixels ; l'étape de localisation peut alors comprendre les étapes suivantes :

- une étape d'acquisition d'images consistant à acquérir, au moyen desdits appareils de capture d'images, des séries d'au moins deux images bidimensionnelles capturées simultanément par lesdits au moins deux appareils de capture d'images respectivement lors des instants de ladite pluralité d'instants d'acquisition,

- une étape d'analyse consistant, pour chaque point caractéristique de ladite pluralité de points caractéristiques et pour chaque instant de la pluralité d'instants d'acquisition, à identifier le point caractéristique concerné dans les images de la série associée à l'instant d'acquisition concerné afin de déterminer les positions respectives du point caractéristique concerné dans ces images, et à déterminer la position tridimensionnelle du point caractéristique concerné sur la base desdites positions respectives.

Le procédé de construction peut comprendre en outre une étape de calibration, antérieure à ladite étape d'acquisition d'images, consistant à calibrer lesdits au moins deux appareils de capture d'images, de manière à déterminer pour chaque pixel considéré d'une pluralité de pixels de la surface sensible de l'un desdits au moins deux appareils de capture d'images :

- au moins un pixel de la surface sensible de l'autre desdits au moins deux appareils de capture d'images correspondant audit pixel considéré,
- une relation de correspondance entre ledit pixel considéré et ledit au moins un pixel correspondant,

ladite relation de correspondance permettant, à partir des positions respectives dudit pixel considéré et dudit au moins un pixel correspondant sur les surfaces sensibles respectives desdits au moins deux appareils de capture d'images, de déterminer la position tridimensionnelle du point de l'espace associé audit pixel considéré.

L'étape de calibration est par exemple une étape de définition d'une géométrie épipolaire desdits au moins deux appareils de capture d'images qui capturent, chacun, une image bidimensionnelle du visage de l'individu, ladite géométrie épipolaire mettant en correspondance chaque pixel considéré de la surface sensible de l'un desdits au moins deux appareils de capture d'images avec un ensemble d'au moins deux pixels correspondant de la surface sensible de l'autre desdits au moins deux appareils de capture d'images, lesdits au moins deux pixels correspondants étant situés sur la droite épipolaire correspondant audit pixel considéré dans la géométrie épipolaire définie lors de cette étape de définition.

On peut également prévoir que, lors de l'étape d'analyse, chaque pluralité de points caractéristiques dudit visage de l'individu dans chacune desdites au moins deux images bidimensionnelles de la série considérée est localisée par une méthode de reconnaissance faciale dudit visage de l'individu.

En variante, l'appareil d'acquisition peut être un appareil de capture de représentations tridimensionnelles ; on peut alors obtenir directement grâce à cet appareil.

Par ailleurs, on peut prévoir que, lors de l'étape d'ajustement, chaque modèle (par exemple tridimensionnel) ajusté par rapport audit modèle (par exemple tridimensionnel) particulier, est obtenu en opérant, par itérations successives, des translations et des rotations sur ledit modèle (tridimensionnel) particulier afin de minimiser la distance entre ledit modèle (tridimensionnel) de référence et ledit modèle tridimensionnel ajusté.

On peut également prévoir, après l'étape de construction, une étape d'extraction d'au moins un paramètre de posture de tête dudit individu à partir d'une représentation du visage de l'individu et dudit modèle du visage de l'individu construit ; éventuellement, on extrait ainsi plusieurs postures, chaque posture de tête étant associée avec une image bidimensionnelle particulière du visage de l'individu.

On peut également déduire à partir d'au moins une représentation (par exemple tridimensionnelle) du visage de l'individu et dudit modèle (par exemple tridimensionnel) du visage de l'individu construit, au moins une information posturale ou comportementale sur l'individu parmi les informations suivantes : l'angle pantoscopique, la position du centre de rotation de l'œil (CRO), le coefficient œil/tête, le « *head cap* », ou encore les oscillations dynamiques de la posture.

Selon un mode de réalisation envisageable, des données représentatives des positions desdits points caractéristiques du visage de l'individu sont mémorisées, en association avec un identifiant de l'individu, dans un appareil électronique de stockage.

On peut prévoir par ailleurs que l'étape de localisation soit mise en œuvre par un dispositif de traitement et que les étapes d'ajustement et de construction soient mises en œuvre par un ordinateur distant, conçu pour échanger des données avec le dispositif de traitement à travers le réseau Internet et apte à recevoir ainsi par exemple les données représentatives des positions des points caractéristiques afin d'effectuer les étapes d'ajustement et de construction sur la base de ces données.

L'invention propose également un dispositif d'analyse de posture d'un visage, comprenant un appareil d'acquisition d'une pluralité de représentations du visage d'un individu, des moyens (par exemple un appareil programmé) conçus pour mettre en œuvre, en utilisant l'appareil d'acquisition, un procédé de construction d'un modèle du visage tel que proposé ci-dessus, et des moyens (par exemple le même appareil programmé) conçus pour extraire d'au moins une desdites représentations, en utilisant le modèle du visage construit, au moins un paramètre représentatif d'une posture du visage.

L'invention propose en outre un procédé d'analyse de posture d'un visage, comprenant les étapes suivantes :

- acquisition d'une pluralité de représentations du visage d'un individu ;
- construction d'un modèle du visage par un procédé tel que proposé ci-dessus utilisant lesdites représentations ;

- extraction d'au moins un paramètre représentatif d'une posture du visage, en utilisant le modèle du visage construit, sur la base d'au moins une desdites représentations.

L'invention propose enfin un procédé d'analyse de posture d'un visage comme spécifié dans la revendication 14.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente un système de prise de mesures ;
- la figure 2 présente les étapes principales d'un exemple de procédé conforme aux enseignements de l'invention ;
- la figure 3 illustre de manière schématique les modèles traités dans le cadre de l'invention.

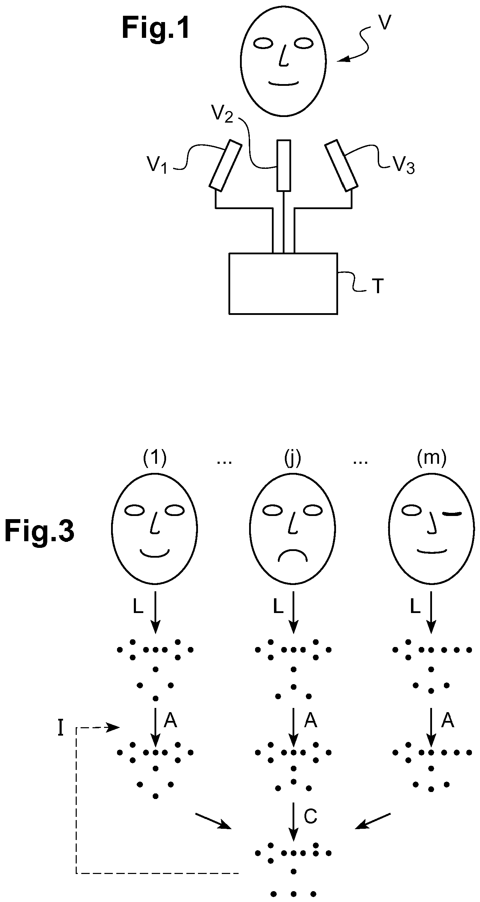

La figure 1 représente un système de prise de mesures sur le visage V d'un individu. Ce système comprend notamment n caméras vidéo $V_i$ (n=3 dans le mode de réalisation présenté en figure 1) et un dispositif de traitement T relié à chacune des n caméras $V_i$.

Le dispositif de traitement T est par exemple basé sur une architecture à microprocesseur. Dans un tel système, le microprocesseur exécute des instructions d'un programme mémorisé dans une mémoire associée au microprocesseur afin de mettre en œuvre des procédés de traitement comme ceux présentés ci-après.

Le dispositif de traitement comprend par exemple en outre un écran, une interface utilisateur (tel qu'un clavier ou une souris) et un appareil électronique de stockage, tel qu'un disque dur. Ces éléments sont connectés au microprocesseur et sont commandés par le microprocesseur du fait de l'exécution d'instructions dédiées par le microprocesseur.

Les caméras vidéo $V_i$ sont étalonnées et calibrées les unes par rapport aux autres, c'est-à-dire que, dans un plan de prise de vue au niveau duquel l'individu positionnera son visage, les n caméras vidéos $V_i$ acquièrent des images représentant la même zone.

Chaque caméra vidéo $V_i$ acquiert une séquence d'images bidimensionnelles $I_i(t_1),...,I_i(t_m)$ prises respectivement à des instants $t_1,..., t_m$.

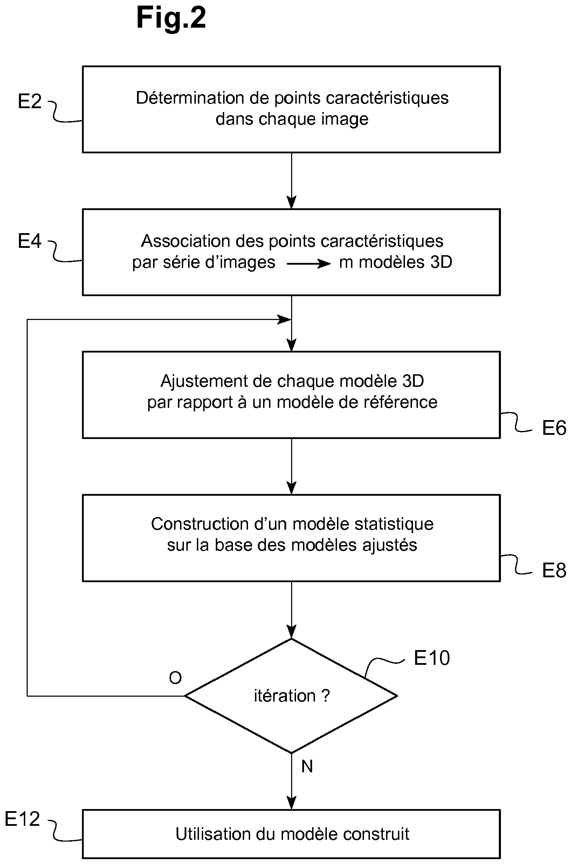

On décrit à présent en référence à la figure 2 un exemple de procédé conforme aux enseignements de l'invention.

Un tel procédé vise à construire un modèle tridimensionnel du visage d'un individu, ici sur la base des séquences d'images bidimensionnelles prises par les caméras $V_i$.

Comme déjà indiqué, chacune des étapes décrites ci-dessous est ici mise en œuvre par le microprocesseur du dispositif de traitement T, sur la base d'instructions mémorisées dans une mémoire associée au microprocesseur ; les données traitées par le microprocesseur (telles que les images prises par les caméras ou les coordonnées des points caractéristiques dans les différents modèles) sont également mémorisées dans cette mémoire, ou dans un autre moyen de mémorisation, tel qu'un disque dur.

Dans une première étape E2, on détermine, dans chaque image $I_i(t_j)$, une pluralité de p points caractéristiques du visage représenté dans l'image concernée. On note $Q_{i,j}(1),...,Q_{i,j}(p)$ les p points déterminés comme correspondant dans un image $I_i(t_j)$ aux p points caractéristiques du visage. Le dispositif de traitement mémorise alors par exemple les coordonnées (bidimensionnelles) de chacun des points caractéristiques dans l'image concernée.

Cette détermination des points caractéristiques est par exemple réalisée à l'aide d'un algorithme de reconnaissance faciale, ici de type "*Active Appearance Models*" (voir par exemple à ce sujet l'article "Active appearance models", de T.F. Cootes, G.J. Edwards, C.J. Taylor, in IEEE Transactions on Pattern Analysis and Machine Intelligence 23 (6): 681, 2011).

On procède ensuite à une étape E4 au cours de laquelle on associe les points caractéristiques de chaque série d'image $I_1(t_j),..., I_n(t_j)$, c'est-à-dire de chaque ensemble de n images prises par les n caméras $V_i$ à un même instant $t_j$, afin d'obtenir, pour chaque série d'images, un modèle tridimensionnel du visage, à savoir un ensemble de localisations des points caractéristiques du visage définies par des coordonnées tridimensionnelles.

Précisément, pour chaque point caractéristique k du visage et pour chaque série d'images $I_1(t_j),...,I_n(t_j)$ (correspondant aux images prises à un instant $t_j$), on utilise les coordonnées des points $Q_{1,j}(k),...,Q_{n,j}(k)$ dans ces images afin d'évaluer les coordonnées tridimensionnelles du point $P_k(t_j)$ où est situé le point caractéristique k du visage à l'instant $t_j$, par exemple en utilisant la géométrie épipolaire (et grâce à la calibration des caméras $V_i$ déjà mentionnée).

On remarque ici que, du fait que le visage de l'individu est mobile et déformable, le modèle tridimensionnel obtenu (défini par l'ensemble des points $P_k(t_j)$ à un instant $t_j$) est variable selon l'instant $t_j$ considéré.

On procède ensuite à une étape E6 à laquelle on ajuste chaque modèle tridimensionnel obtenu à l'étape précédente par rapport à un modèle de référence.

Dans le mode de réalisation décrit ici, on utilise le modèle tridimensionnel associé à l'instant $t_1$ comme modèle de référence lors de la première itération de l'étape E6. En variante, on pourrait utiliser pour la première itération de l'étape E6 un autre modèle tridimensionnel obtenu à l'étape E4 comme modèle de référence.

Pour chaque modèle tridimensionnel (associé à la prise de vue à l'instant $t_j$), l'étape d'ajustement est ici réalisée en minimisant la distance euclidienne entre le nuage de points du modèle tridimensionnel concerné et le nuage de points du modèle tridimensionnel de référence, par translation et rotation dans l'espace du nuage de points du modèle tridimensionnel concerné.

Ainsi, si on note $R_1$,..., $R_p$ les points du modèle de référence (pour la première itération, comme déjà indiqué, on utilise le modèle associé à l'instant $t_1$, soit $R_k=P_k(t_1)$ pour k allant de 1 à p), on cherche donc la transformation F (composée d'une translation et d'une rotation) qui minimise la distance euclidienne entre le nuage de points $R_k$ du modèle de référence et le nuage de points du modèle concerné après transformation, c'est-à-dire qui minimise :

$$\sum_{k=1}^{p} d\left(F\left(P_k(t_j)\right), R_k\right),$$ où d est la distance (euclidienne) entre deux points.

On note $P'_k(t_j)$ les points du modèle ajusté (i.e. après ajustement) :

$$P'_k(t_j) = F(P_k(t_j)).$$

La détermination des points du modèle ajusté (ou, ce qui est équivalent, de la transformation F) est par exemple mise en œuvre au moyen d'un algorithme de type ICP (pour "*Iterative Closest Point*" - à ce sujet voir par exemple l'article "Comparing ICP Variants on Real-World Data Sets" de F. Pomerleau, F. Colas, R. Siegwart et S. Magnenat in Autonomous Robots, 34(3), pages 133-148, avril 2013.)

On procède alors à une étape E8 de construction d'un modèle statistique formé d'un ensemble de points $S_k$ sur la base des modèles ajustés, formés chacun des points $P'_k(t_j)$. Précisément, chaque point $S_k$ du modèle statistique est construit sur la base des points $P'_k(t_1)$,...,$P'_k(t_m)$ où est situé un point caractéristique donné k du visage aux différents instants $t_1$,...,$t_m$ de prise de vue.

Pour chaque point caractéristique k du visage, on détermine par exemple le point $S_k$ du modèle statistique comme l'isobarycentre des points $P'_k(t_1)$,...,$P'_k(t_m)$ correspondants dans les différents modèles ajustés.

Selon une possibilité de réalisation, on peut rejeter les points aberrants : pour définir $S_k$, on détermine à nouveau l'isobarycentre des points $P'_k(t_j)$, sans tenir compte toutefois des points trop éloignés du premier isobarycentre calculé (isobarycentre calculé sur la base des m points $P'_k(t_j)$), par exemple situés à une distance du premier isobarycentre calculé supérieure à un seuil. On propose ici d'utiliser comme seuil, dans la distribution des distances des différents points au premier isobarycentre calculé, la moyenne plus deux écarts-type.

Le point $S_k$ du modèle statistique est construit comme le barycentre des points $P'_k(t_1)$,...,$P'_k(t_m)$ pondérés par un coefficient lie à un coefficient d'erreur déterminé lors de la reconnaissance des points caractéristiques du visage à l'étape E2 (la reconnaissance de certains points pouvant être plus ou moins certaine en fonction de la position du visage).

Dans une variante qui ne fait pas partie de l'invention, le point $S_k$ du modèle statistique peut être construit comme le barycentre des points $P'_k(t_1)$,...,$P'_k(t_m)$ pondérés par un coefficient lie

- à l'erreur résiduelle du point après ajustement (c'est-à-dire la distance euclidienne entre le point $P'_k(t_j)$, après ajustement, concerné et le point de référence $R_k$ associé).

On propose ici par ailleurs de n'utiliser dans le modèle statistique que les points $S_k$ pour lesquels l'incertitude est faible. On utilise par exemple comme mesure de l'incertitude (pour chaque valeur de k) la somme de la moyenne et de deux fois l'écart-type de la distribution formée des distances entre le point $S_k$ déterminé comme indiqué ci-dessus et les différents points $P'_k(t_j)$ correspondants dans les modèles ajustés.

Seuls les points $S_k$ pour lesquels cette mesure d'incertitude est inférieure à un seuil prédéterminé sont conservés dans la suite du traitement. Si cette condition ne permet pas de conserver trois points, on conserve les trois points ayant la plus faible mesure d'incertitude.

Ceci permet de sélectionner les points les plus stables et les plus caractéristiques du visage traité et ainsi de renforcer la robustesse du modèle, qui pourra dès lors fournir un référentiel métrologique stable et précis.

En variante, on pourrait permettre à l'utilisateur (par exemple un opticien) de choisir (par sélection interactive, par exemple au moyen de l'écran et de l'interface utilisateur du dispositif de traitement T) les points $S_k$ qui sont le plus représentatifs, ou de donner une pondération à chacun des points $S_k$.

Selon une autre variante, on pourrait reprendre dans le modèle statistique l'ensemble des points $S_k$ déterminés chacun à partir des m points $P'_k(t_j)$ correspondants dans les m modèles ajustés.

Le modèle statistique obtenu lors de la première itération de l'étape E8 peut être utilisé en tant que référentiel métrologique. Il est toutefois également possible minimiser les erreurs d'ajustement comme expliqué à présent.

On détermine dans ce cas à l'étape E10 si une nouvelle itération des étapes E6 et E8 est nécessaire. Pour ce faire, on calcule par exemple une fonction de mérite égale à la moyenne des mesures d'incertitudes obtenues pour l'ensemble des points $S_k$ conservés à l'étape E8

S'il est déterminé à l'étape E10 qu'une nouvelle itération des étapes E6 et E8 doit être mise en œuvre (par exemple parce que la fonction de mérite qui vient d'être calculée est supérieure à un seuil prédéfini et qu'un nombre prédéterminé d'itérations n'a pas été atteint), le procédé se poursuit en retournant à l'étape E6, en utilisant cette fois comme modèle de référence le modèle statistique obtenu lors de la dernière itération de l'étape E8. On met donc en œuvre l'étape E6 en utilisant, pour les points $S_k$ pour lesquels l'incertitude est faible : $R_k = S_k$. (Comme déjà indiqué, on propose ici que les autres points - à incertitude élevée - ne soient plus utilisés dans la suite du traitement.)

L'étape E8 fait suite à l'étape E6, comme déjà expliqué ci-dessus.

S'il est déterminé à l'étape E10 qu'une nouvelle itération des étapes E6 et E8 n'est pas nécessaire (par exemple par ce que la fonction de mérite qui vient d'être calculée est inférieure ou égale au seuil prédéfini ou que le nombre prédéterminé d'itérations est atteint), on peut utiliser le dernier modèle statistique obtenu à l'étape E8 en tant que référentiel métrologique (étape E12).

On réalise par exemple une prise de mesure sur le visage dans le référentiel métrologique qui vient d'être défini. On remarque qu'une telle mesure est possible grâce à l'étalonnage des caméras vidéo $V_i$. Les mesures obtenues par la prise de mesure pourront être utilisées dans la fabrication de lunettes (par exemple ophtalmiques).

L'étape E12 à laquelle on utilise le référentiel métrologique (ou modèle du visage) peut également inclure une étape d'extraction de paramètres de posture, ou de comportement lorsque l'évolution de la posture dans le temps est considérée, de l'individu (informations posturales ou comportementales). Ces paramètres incluent par exemple l'angle pantoscopique, la position du centre de rotation de l'œil (CRO), le coefficient œil/tête, le « *head cap* » (qui correspond au décalage du plan sagittal par rapport à la fixation du regard), ou encore les variations (par exemple les oscillations) dynamiques de la posture.

Ces paramètres sont extraits à partir de représentations du visage (par exemple des images bidimensionnelles ou des représentations tridimensionnelles) dans lesquelles le visage peut prendre différentes postures ; il s'agit éventuellement des représentations acquises et utilisées (notamment à l'étape E2) pour la construction du modèle du visage décrite ci-dessous.

L'extraction des paramètres représentatifs de la posture est par exemple réalisée par comparaison d'une ou plusieurs de ces représentations du visage avec le modèle (ou référentiel) construit aux étapes E2 à E10 comme décrit ci-dessus, ce modèle représentant une posture de référence (par exemple "*regard au loin*", "*visage vertical*", "*position naturelle*").

En particulier, les points caractéristiques $P_k(t_j)$ déterminées à l'étape E4 pour différents instant $t_j$ peuvent être utilisés afin de déterminer, par comparaison au modèle (ou référentiel) construit, les variations dynamiques de la posture dans le référentiel construit.

La caractérisation de la posture (ou de l'évolution de la posture) par ces paramètres de posture permet de déduire le positionnement des yeux de l'individu dans l'environnement ; le positionnement des yeux dans l'environnement peut quant à lui être utilisé pour définir des paramètres de conception de lentilles ophtalmiques (par exemple des verres de lunettes destinées à l'individu), ce qui permet d'optimiser la conception de ces lentilles ophtalmiques pour l'individu concerné.

On a représenté de manière schématique en figure 3 le traitement réalisé par le procédé de la figure 2. On remarque que les objets (visage, modèles du visage) sont représentés en deux dimensions la figure 3 pour la clarté de l'exposé, mais sont tridimensionnels dans le traitement réalisé par le procédé de la figure 2.

Comme visible en figure 3, le procédé comprend la localisation L de p points caractéristiques $P_k(t_j)$ du visage à m instants distincts $t_j$. Cette localisation L est réalisée par les étapes E2 et E4 du procédé de la figure 2.

On obtient ainsi m modèles tridimensionnels (formés chacun par ces p points caractéristiques).

On procède alors à l'ajustement A de chaque modèle tridimensionnel en le rapprochant autant que possible d'un modèle de référence (ici le premier modèle tridimensionnel). Ceci correspond à l'étape E6 décrite ci-dessus.

On obtient alors m modèles tridimensionnels ajustés (formés des points $P'_k(t_j)$).

On peut alors procéder à la construction C d'un modèle statistique (formé des points $S_k$) sur la base des m modèles tridimensionnels ajustés. Ceci correspond à l'étape E8 décrite ci-dessus.

On peut alors utiliser le modèle statistique obtenu en tant que référentiel métrologique, ou procéder à une nouvelle itération I des étapes d'ajustement A et de construction C afin d'affiner le résultat.

Dans le mode de réalisation décrit ci-dessus, le procédé représenté à la figure 2 est mis en œuvre par le dispositif de traitement T.

On peut prévoir en variante que certaines étapes soient mises en œuvre par un autre dispositif, par exemple un ordinateur distant conçu pour échanger des données avec le dispositif de traitement, typiquement via le réseau Internet.

Pour ce faire, le dispositif de traitement T comprend par exemple un module de communication connecté à un réseau informatique et qui permet d'échanger des données via le réseau Internet, notamment avec l'ordinateur distant.

Ainsi, l'étape de localisation est par exemple mise en œuvre par le dispositif de traitement et des données représentatives des positions desdits points caractéristiques du visage de l'individu, obtenues à l'étape de localisation, sont mémorisées, éventuellement en association avec un identifiant de l'individu, dans l'appareil électronique de stockage du dispositif de traitement.

Ces données peuvent ensuite être transmises à l'ordinateur distant au moyen du module de communication. L'ordinateur distant peut alors mettre en œuvre, sur la base des positions des points caractéristiques du visage de l'individu représentées par les données qu'il a reçues, les étapes d'ajustement et de construction du modèle du visage de l'individu, ainsi qu'éventuellement en outre l'étape d'extraction d'au moins un paramètre de posture, en utilisant le modèle construit et sur la base des données reçues.

**Revendications**

1.  Procédé de construction d'un modèle du visage (V) d'un individu comportant :

    - une étape de localisation (L ; $E_2$, $E_4$) consistant à localiser, au moyen d'un appareil d'acquisition ($V_1$, $V_2$, $V_3$) et à chaque instant d'une pluralité d'instants d'acquisition (1, j, m), une même pluralité de points caractéristiques dudit visage (V) de l'individu, en déterminant un coefficient d'erreur lors de la reconnaissance des points caractéristiques, de manière à former une pluralité correspondante de modèles particuliers dudit visage (V) de l'individu comprenant chacun les positions desdits points caractéristiques du visage (V) de l'individu à l'instant (1 ; j ; m) associé au modèle particulier concerné,
    - une étape d'ajustement (A ; E6) consistant à déterminer, pour chaque modèle particulier dudit visage (V) de l'individu, un modèle ajusté par rapport à un modèle de référence dudit visage (V) de l'individu, le modèle ajusté étant obtenu sur la base du modèle particulier concerné de sorte que la distance entre le modèle ajusté et le modèle de référence soit minimale au sens d'une métrique donnée, et
    - une étape de construction (C ; E8) consistant à construire, à partir des modèles ajustés obtenus à l'étape d'ajustement (A ; E6), ledit modèle du visage (V) de l'individu, en déterminant, pour chaque point caractéristique du visage (V), un point dudit modèle du visage (V) de l'individu comme le barycentre des points correspondants dans les différents modèles ajustés, pondérés par un coefficient lié au coefficient d'erreur déterminé.

2.  Procédé de construction selon la revendication 1, selon lequel ledit modèle de référence est l'un desdits modèles particuliers.

3.  Procédé de construction selon l'une des revendications 1 et 2, selon lequel :

    - on exécute une première fois les étapes de localisation, d'ajustement et de construction pour déterminer, à partir desdits modèles particuliers déterminés lors de l'étape de localisation, des premiers modèles ajustés et construire un premier modèle dudit visage de l'individu,
    - on exécute une deuxième fois l'étape d'ajustement, en utilisant comme modèle de référence ledit premier modèle du visage de l'individu, afin de déterminer, pour chaque modèle particulier, un deuxième modèle ajusté par rapport audit modèle de référence, et
    - on exécute une deuxième fois l'étape de construction à partir des deuxièmes modèles ajustés obtenus à la deuxième étape d'ajustement.

4.  Procédé de construction selon l'une des revendications 1 à 3, **caractérisé en ce que** le modèle du visage (V), le modèle de référence, les modèles particuliers et les modèles ajustés sont tridimensionnels et **en ce que** les positions des points caractéristiques sont tridimensionnelles.

5.  Procédé de construction selon la revendication 4, **caractérisé en ce que** l'appareil d'acquisition comprend au moins deux appareils de capture d'images ($V_1$, $V_2$, $V_3$) adaptés, chacun, à capturer au moins une image bidimensionnelle dudit visage (V) de l'individu sur une surface sensible de pixels et **en ce que** l'étape de localisation comprend les étapes suivantes :

    - une étape d'acquisition d'images consistant à acquérir, au moyen desdits appareils de capture d'images, des séries d'au moins deux images bidimensionnelles capturées simultanément par lesdits au moins deux appareils de capture d'images respectivement lors des instants de ladite pluralité d'instants d'acquisition,
    - une étape d'analyse consistant, pour chaque point caractéristique de ladite pluralité de points caractéristiques et pour chaque instant de la pluralité d'instants d'acquisition, à identifier (E2) le point caractéristique concerné dans les images de la série associée à l'instant d'acquisition concerné afin de déterminer les positions respectives du point caractéristique concerné dans ces images, et à déterminer (E4) la position tridimensionnelle du point caractéristique concerné sur la base desdites positions respectives.

6.  Procédé de construction selon la revendication 5, comportant une étape de calibration, antérieure à ladite étape d'acquisition d'images, consistant à calibrer lesdits au moins deux appareils de capture d'images ($V_1$, $V_2$, $V_3$), de manière à déterminer pour chaque pixel considéré d'une pluralité de pixels de la surface sensible de l'un desdits au moins deux appareils de capture d'images :

    - au moins un pixel de la surface sensible de l'autre desdits au moins deux appareils de capture d'images (V₁, V₂, V₃) correspondant audit pixel considéré,

- une relation de correspondance entre ledit pixel considéré et ledit au moins un pixel correspondant,

ladite relation de correspondance permettant, à partir des positions respectives dudit pixel considéré et dudit au moins un pixel correspondant sur les surfaces sensibles respectives desdits au moins deux appareils de capture d'images (V₁, V₂, V₃), de déterminer la position tridimensionnelle du point de l'espace associé audit pixel considéré.

7. Procédé de construction selon la revendication 5 ou 6, selon lequel, lors de l'étape d'analyse (E2), chaque pluralité de points caractéristiques dudit visage de l'individu dans chacune desdites au moins deux images bidimensionnelles de la série considérée est localisée par une méthode de reconnaissance faciale dudit visage (V) de l'individu.

8. Procédé de construction selon l'une des revendications 1 à 7, comprenant, après l'étape de construction (E8), une étape d'extraction (E12) d'au moins un paramètre de posture de tête dudit individu à partir d'une représentation du visage de l'individu et dudit modèle du visage de l'individu construit.

9. Procédé de construction selon l'une des revendications 1 à 8, selon lequel, on déduit à partir d'au moins une représentation du visage de l'individu et dudit modèle du visage (V) de l'individu construit, au moins une information posturale ou comportementale sur l'individu parmi les informations suivantes : l'angle pantoscopique, la position du centre de rotation de l'œil - CRO-, le coefficient œil/tête, le head cap qui correspond au décalage du plan sagittal par rapport à la fixation du regard, ou encore les oscillations dynamiques de la posture.

10. Procédé de construction selon l'une des revendications 1 à 9, dans lequel des données représentatives des positions desdits points caractéristiques du visage (V) de l'individu sont mémorisées, en association avec un identifiant de l'individu, dans un appareil électronique de stockage.

11. Procédé de construction selon l'une des revendications 1 à 10, dans lequel l'étape de localisation (L ; E2, E4) est mise en œuvre par un dispositif de traitement et dans lequel les étapes d'ajustement (A ; E6) et de construction (C ; E8) sont mises en œuvre par un ordinateur distant.

12. Dispositif d'analyse de posture d'un visage (V), comprenant

- un appareil d'acquisition (V₁, V₂, V₃) d'une pluralité de représentations du visage (V) d'un individu ;
- des moyens conçus pour mettre en œuvre un procédé de construction d'un modèle du visage conforme à l'une des revendications 1 à 11, en utilisant l'appareil d'acquisition ;
- des moyens conçus pour extraire d'au moins une desdites représentations, en utilisant le modèle du visage construit, au moins un paramètre représentatif d'une posture du visage (V).

13. Procédé d'analyse de posture d'un visage, comprenant les étapes suivantes :

- acquisition d'une pluralité de représentations du visage d'un individu ;
- construction d'un modèle du visage par un procédé conforme à l'une des revendications 1 à 11 utilisant lesdites représentations ;
- extraction d'au moins un paramètre représentatif d'une posture du visage, en utilisant le modèle du visage construit, sur la base d'au moins une desdites représentations.

14. Procédé d'analyse de posture d'un visage selon la revendication 13, dans lequel la localisation de points caractéristiques est mise en œuvre au moyen d'un dispositif de traitement ;

dans lequel la construction d'un modèle du visage est mise en œuvre par un ordinateur distant ; et dans lequel l'extraction d'au moins un paramètre de posture est mise en œuvre par l'ordinateur distant,

ledit procédé comprenant en outre une étape de transmission de données représentatives des points caractéristiques du dispositif de traitement à l'ordinateur distant.

**Patentansprüche**

1. Verfahren zur Herstellung eines Modells des Gesichts (V) einer Person, umfassend:

- einen Lokalisierungsschritt (L; E₂, E₄), der darin besteht, mit Hilfe einer Erfassungsvorrichtung (V₁, V₂, V₃) und zu jedem Zeitpunkt einer Vielzahl von Erfassungszeitpunkten (1, j, m) eine gleiche Vielzahl von charakteristischen Punkten des Gesichts (V) der Person zu lokalisieren, wobei während der Erkennung der charakteristischen Punkte ein Fehlerkoeffizient bestimmt wird, um eine entsprechende Vielzahl von speziellen Modellen des Gesichts (V) der Person zu bilden, die jeweils die Positionen der charakteristischen Punkte des Gesichts (V) der Person zu dem Zeitpunkt (1; j; m), der mit dem betroffenen speziellen Modell assoziiert ist, beinhalten,

- einen Anpassungsschritt (A; E6), der darin besteht, für jedes spezielle Modell des Gesichts (V) der Person ein in Bezug auf ein Referenzmodell des Gesichts (V) der Person angepasstes Modell zu bestimmen, wobei das angepasste Modell auf Basis des betroffenen speziellen Modells erhalten wird, sodass für eine gegebene Metrik der Abstand zwischen dem angepassten Modell und dem Referenzmodell minimal ist, und

- einen Herstellungsschritt (C; E8), der darin besteht, anhand der während des Anpassungsschritts (A; E6) erhaltenen angepassten Modelle das Modell des Gesichts (V) der Person herzustellen, wobei für jeden charakteristischen Punkt des Gesichts (V) ein Punkt des Modells des Gesichts (V) der Person als das Baryzentrum der entsprechenden Punkte in den verschiedenen angepassten Modellen bestimmt wird, gewichtet durch einen Koeffizienten, der mit dem bestimmten Fehlerkoeffizienten zusammenhängt.

2. Herstellungsverfahren nach Anspruch 1, wobei das Referenzmodell eines der speziellen Modelle ist.

3. Herstellungsverfahren nach einem der Ansprüche 1 und 2, wobei:

- die Schritte der Lokalisierung, der Anpassung und der Herstellung ein erstes Mal ausgeführt werden, um anhand der während des Lokalisierungsschritts bestimmten speziellen Modelle erste angepasste Modelle zu bestimmen und ein erstes Modell des Gesichts der Person herzustellen,

- der Anpassungsschritt ein zweites Mal ausgeführt wird, wobei als Referenzmodell das erste Modell des Gesichts der Person verwendet wird, um für jedes spezielle Modell ein zweites, in Bezug auf das Referenzmodell angepasstes Modell zu bestimmen, und

- der Herstellungsschritt ein zweites Mal anhand der zweiten angepassten Modelle, die während des zweiten Anpassungsschritts erhalten wurden, ausgeführt wird.

4. Herstellungsverfahren nach einem der Ansprüche 1 bis 3, **dadurch gekennzeichnet, dass** das Modell des Gesichts (V), das Referenzmodell, die speziellen Modelle und die angepassten Modelle dreidimensional sind und dass die Positionen der charakteristischen Punkte dreidimensional sind.

5. Herstellungsverfahren nach Anspruch 4, **dadurch gekennzeichnet, dass** die Erfassungsvorrichtung mindestens zwei Bildaufnahmevorrichtungen ($V_1$,

$V_2$, $V_3$) beinhaltet, die jeweils angepasst sind, mindestens ein zweidimensionales Bild des Gesichts (V) der Person auf einer Sensorfläche von Pixeln aufzunehmen, und dass der Lokalisierungsschritt die folgenden Schritte beinhaltet:

- einen Bilderfassungsschritt, der darin besteht, mit Hilfe der Bildaufnahmevorrichtungen Folgen von mindestens zwei zweidimensionalen Bildern zu erfassen, die durch die mindestens zwei Bildaufnahmevorrichtungen während der Zeitpunkte der Vielzahl von Erfassungszeitpunkten jeweils simultan aufgenommen werden,

- einen Analyseschritt, der für jeden charakteristischen Punkt der Vielzahl von charakteristischen Punkte und für jeden Zeitpunkt der Vielzahl von Erfassungszeitpunkten darin besteht, den betroffenen charakteristischen Punkt in den Bildern der mit dem betroffenen Erfassungszeitpunkt assoziierten Folge zu identifizieren (E2), um die jeweiligen Positionen des betroffenen charakteristischen Punkts in diesen Bildern zu bestimmen, und die dreidimensionale Position des betroffenen charakteristischen Punkts auf Basis der jeweiligen Positionen zu bestimmen (E4).

6. Herstellungsverfahren nach Anspruch 5, das vor dem Bilderfassungsschritt einen Kalibrierungsschritt umfasst, der darin besteht, die mindestens zwei Bildaufnahmevorrichtungen ($V_1$, $V_2$, $V_3$) zu kalibrieren, um für jedes betrachtete Pixel einer Vielzahl von Pixeln der Sensorfläche der einen der mindestens zwei Bildaufnahmevorrichtungen Folgendes zu bestimmen:

- mindestens ein Pixel der Sensorfläche der anderen der mindestens zwei Bildaufnahmevorrichtungen ($V_1$, $V_2$, $V_3$), das dem betrachteten Pixel entspricht,

- eine korrespondierende Beziehung zwischen dem betrachteten Pixel und dem mindestens einen korrespondieren Pixel,

wobei es die korrespondierende Beziehung erlaubt, anhand der jeweiligen Positionen des betrachteten Pixels und des mindestens einen korrespondierenden Pixels auf den jeweiligen Sensorflächen der mindestens zwei Bildaufnahmevorrichtungen ($V_1$, $V_2$, $V_3$) die dreidimensionale Position des Punkts im Raum, der mit dem betrachteten Pixel assoziiert ist, zu bestimmen.

7. Herstellungsverfahren nach Anspruch 5 oder 6, wobei während des Analyseschritts (E2) jede Vielzahl von charakteristischen Punkten des Gesichts der Person in jedem der mindestens zwei zweidimensionalen Bilder der betrachteten Folge durch ein Verfahren zur Gesichtserkennung des Gesichts (V) der Person lokalisiert wird.

8. Herstellungsverfahren nach einem der Ansprüche 1 bis 7, das nach dem Herstellungsschritt (E8) einen Schritt zum Extrahieren (E12) mindestens eines Kopfhaltungsparameters der Person anhand einer Darstellung des Gesichts der Person und des hergestellten Modells des Gesichts der Person beinhaltet.

9. Herstellungsverfahren nach einem der Ansprüche 1 bis 8, wobei anhand mindestens einer Darstellung des Gesichts der Person und des hergestellten Modells des Gesichts (V) der Person mindestens eine Haltungs- oder Verhaltensinformation über die Person aus den folgenden Informationen abgeleitet wird: dem pantoskopischen Winkel, der Position des Augendrehpunkts - CRO -, dem Auge-Kopf-Koeffizienten, dem Head Cap, der der Neigung der Sagittalebene in Bezug auf die Blickrichtung entspricht, oder aber den dynamischen Schwankungen der Haltung.

10. Herstellungsverfahren nach einem der Ansprüche 1 bis 9, wobei die Daten, die für die Positionen der charakteristischen Punkte des Gesichts (V) der Person repräsentativ sind, zusammen mit einer Kennung der Person in einer elektronischen Speichervorrichtung gespeichert werden.

11. Herstellungsverfahren nach einem der Ansprüche 1 bis 10, wobei der Lokalisierungsschritt (L; E2, E4) durch eine Verarbeitungseinrichtung implementiert wird und wobei der Anpassungsschritt (A; E6) und der Herstellungsschritt (C; E8) durch einen entfernten Computer implementiert werden.

12. Einrichtung zur Analyse der Haltung eines Gesichts (V), beinhaltend

- eine Vorrichtung ($V_1$, $V_2$, $V_3$) zur Erfassung einer Vielzahl von Darstellungen des Gesichts (V) einer Person;
- Mittel, die dazu ausgelegt sind, unter Verwendung der Erfassungsvorrichtung ein Verfahren zur Herstellung eines Modells des Gesichts nach einem der Ansprüche 1 bis 11 zu implementieren;
- Mittel, die dazu ausgelegt sind, unter Verwendung des hergestellten Modells des Gesichts aus mindestens einer der Darstellungen mindestens einen Parameter zu extrahieren, der für eine Haltung des Gesichts (V) repräsentativ ist.

13. Verfahren zur Analyse einer Haltung eines Gesichts, das die folgenden Schritte beinhaltet:

- Erfassen einer Vielzahl von Darstellungen des Gesichts einer Person;
- Herstellen eines Modells des Gesichts durch ein Verfahren nach einem der Ansprüche 1 bis 11 unter Verwendung der Darstellungen;
- Extrahieren mindestens eines Parameters, der für eine Haltung des Gesichts repräsentativ ist, unter Verwendung des hergestellten Modells des Gesichts, auf Basis mindestens einer der Darstellungen.

14. Verfahren zur Analyse einer Haltung eines Gesichts nach Anspruch 13, wobei die Lokalisierung von charakteristischen Punkten mit Hilfe einer Verarbeitungseinrichtung implementiert wird; wobei die Herstellung eines Modells des Gesichts durch einen entfernten Computer implementiert wird; und wobei das Extrahieren mindestens eines Haltungsparameters durch den entfernten Computer implementiert wird, wobei das Verfahren ferner einen Schritt des Übertragens von Daten, die für die charakteristischen Punkte repräsentativ sind, von der Verarbeitungseinrichtung an den entfernten Computer beinhaltet.

**Claims**

1. A method of constructing a model of the face (V) of an individual, comprising:

- a localization step (L; $E_2$, $E_4$) consisting of localizing, by means of an acquisition apparatus ($V_1$, $V_2$, $V_3$) and at each time of a plurality of acquisition times (1, j, m), one and the same plurality of points characteristic of said face (V) of the individual, while determining an error coefficient during the recognition of the characteristic points, so as to form a corresponding plurality of particular models of said face (V) of the individual, each comprising the positions of said points characteristic of the face (V) of the individual at the time (1; j; m) associated with the particular model in question;
- an adjustment step (A; E6) consisting of determining, for each particular model of said face (V) of the individual, a model adjusted with respect to a reference model of said face (V) of the individual, the adjusted model being obtained on the basis of the particular model in question such that the distance between the adjusted model and the reference model is minimal in the sense of a given metric; and
- a construction step (C; E8) consisting of constructing, from the adjusted models obtained in the adjustment step (A; E6), said model of the face (V) of the individual, by determining, for each characteristic point of the face (V), a point of said model of the face (V) of the individual as the barycentre of corresponding points in the various adjusted models, weighted by a coefficient linked to the determined error coefficient.

2. A construction method according to claim 1, wherein said reference model is one of said particular models.

3. A construction method according to one of claims 1 and 2, wherein:

   - the localization, adjustment and construction steps are carried out a first time in order to determine, from said particular models determined in the localization step, first adjusted models and to construct a first model of said face of the individual;
   - the adjustment step is carried out a second time, using said first model of the face of the individual as a reference model, in order to determine, for each particular model, a second model adjusted with respect to said reference model; and
   - the construction step is carried out a second time on the basis of the second adjusted models obtained in the second adjustment step.

4. A construction method according to one of claims 1 to 3, **characterised in that** the model of the face (V), the reference model, the particular models and the adjusted models are three-dimensional and **in that** the positions of the characteristic points are three-dimensional.

5. A construction method according to claim 4, **characterised in that** the acquisition apparatus comprises at least two image capture devices ($V_1$, $V_2$, $V_3$), each suitable for capturing at least one two-dimensional image of said face (V) of the individual on a sensitive surface of pixels, and **in that** the localization step comprises the following steps:

   - an image acquisition step consisting of acquiring, by means of said image capture devices, series of at least two two-dimensional images captured simultaneously by said at least two image capture devices, respectively during the times of said plurality of acquisition times;
   - an analysis step consisting, for each characteristic point of said plurality of characteristic points and for each time of the plurality of acquisition times, of identifying (E2) the characteristic point in question in the images of the series associated with the acquisition time in question in order to determine the respective positions of the characteristic point in question in these images, and of determining (E4) the three-dimensional position of the characteristic point in question on the basis of said respective positions.

6. A construction method according to claim 5, comprising a calibration step, prior to said image acquisition step, consisting of calibrating said at least two image capture devices ($V_1$, $V_2$, $V_3$), so as to determine, for each pixel in question of a plurality of pixels of the sensitive surface of one of said at least two image capture devices:

   - at least one pixel of the sensitive surface of the other of said at least two image capture devices ($V_1$, $V_2$, $V_3$) corresponding to said pixel in question;
   - a correspondence relationship between said pixel in question and said at least one corresponding pixel;
   said correspondence relationship allowing, from the respective positions of said pixel in question and of said at least one corresponding pixel on the respective sensitive surfaces of said at least two image capture devices ($V_1$, $V_2$, $V_3$), the three-dimensional position of the point in space associated with said pixel in question to be determined.

7. A construction method according to claim 5 or 6, wherein, in the analysis step (E2), each plurality of points characteristic of said face of the individual in each of said at least two two-dimensional images of the series in question is localized by a facial recognition method for recognizing said face (V) of the individual.

8. A construction according to one of claims 1 to 7, comprising, after the construction step (E8), a step (E12) of extracting at least one head posture parameter of said individual from a representation of the face of the individual and from said constructed model of the face of the individual.

9. A construction method according to one of claims 1 to 8, wherein at least one item of postural or behavioural information on the individual is deduced from at least one representation of the face of the individual and from said constructed model of the face (V) of the individual, the information being from among the following: the pantoscopic angle, the position of the centre of rotation of the eye - ERC, the eye/head coefficient, the head cap which corresponds to the offset of the sagittal plane with respect to the fixation of the gaze, or the dynamic oscillations of the posture.

10. A construction method according to one of claims 1 to 9, wherein data representative of the positions of said points characteristic of the face (V) of the individual are stored, in conjunction with an identifier of

he individual, in an electronic storage device.

11. A construction method according to one of claims 1 to 10, wherein the localization step (L; E2, E4) is implemented by a processing device and wherein the adjustment (A; E6) and construction (C; E8) steps are implemented by a remote computer.

12. A device for analysing the posture of a face (V), comprising:

   - an apparatus for acquiring ($V_1$, $V_2$, $V_3$) a plurality of representations of the face (V) of an individual;
   - means designed to implement a method of constructing a model of the face in accordance with one of claims 1 to 11, using the acquisition apparatus;
   - means designed to extract, using the constructed model of the face, at least one parameter representative of a posture of the face (V) from at least one of said representations.

13. A method of analysing the posture of a face, comprising the following steps:

   - acquiring a plurality of representations of the face of an individual;
   - constructing a model of the face using a method in accordance with one of claims 1 to 11, using said representations;
   - extracting, using the constructed model of the face, at least one parameter representative of a posture of the face on the basis of at least one of said representations.

14. A method of analysing the posture of a face according to claim 13, wherein localizing characteristic points is implemented by a processing device; wherein constructing a model of the face is implemented by a remote computer; and wherein extracting at least one posture parameter is implemented by the remote computer, said method further comprising a step of transmitting data representative of the characteristic points from the processing device to the remote computer.

2

Fig.1

Fig.3

# Fig.2

E2 — Détermination de points caractéristiques dans chaque image

E4 — Association des points caractéristiques par série d'images ⟶ m modèles 3D

Ajustement de chaque modèle 3D par rapport à un modèle de référence — E6

Construction d'un modèle statistique sur la base des modèles ajustés — E8

E10

O    itération ?

N

E12 — Utilisation du modèle construit

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006210165 A

- WO 2014032496 A

**Littérature non-brevet citée dans la description**

- **T.F. COOTES ; G.J. EDWARDS ; C.J. TAYLOR.** Active appearance models. *IEEE Transactions on Pattern Analysis and Machine Intelligence,* 2011, vol. 23 (6), 681

- **F. POMERLEAU ; F. COLAS ; R. SIEGWART ; S. MAGNENAT.** Comparing ICP Variants on Real-World Data Sets. *Autonomous Robots,* Avril 2013, vol. 34 (3), 133-148